# EUROPÄISCHE PATENTSCHRIFT

(11) **EP 2 497 969 B1**
(45) Veröffentlichungstag und Bekanntmachung des Hinweises auf die Patenterteilung: **16.05.2018**
(21) Anmeldenummer: 12001505.2
(22) Anmeldetag: 06.03.2012
(51) Int. Cl.: F16D 65/62

(54) **Verfahren zum Betreiben eines Kraftwagens**
Method of operating a motor vehicle
Procédé destiné au fonctionnement d'un véhicule automobile

(30) Priorität: 10.03.2011 DE 102011013593
(43) Veröffentlichungstag der Anmeldung: 12.09.2012
(73) Patentinhaber: Audi AG, 85045 Ingolstadt (DE)
(72) Erfinder: Angel, Martin, 86697 Oberhausen (DE); Strutz, Timo, 85139 Wettstetten (DE)

(56) Entgegenhaltungen:
- DE-A1- 10 107 844
- DE-A1-102004 030 464
- DE-A1-102009 023 782
- JP-A- 2001 343 036

## Beschreibung

Die Erfindung betrifft ein Verfahren zum Betreiben eines Kraftwagens mit wenigstens einer Bremse.

Unter dem Lüftspiel einer Bremse wird der Abstand zwischen den korrespondierenden Reibflächen der Bremsbeläge und der Bremsscheibe der Bremse im unbetätigten Ruhezustand verstanden. Bei gängigen hydraulisch betätigten Bremsen ist dieser Abstand konstruktiv vorgegeben und daher nicht variabel.

Aus der DE 196 21 533 A1 ist eine elektromechanische Bremse bekannt, bei welcher das Lüftspiel mittels einer Nachstelleinrichtung eingestellt werden kann. Die Einstellung erfolgt dabei auf einen konstanten vorgegebenen Sollwert und erfolgt in regelmäßigen Zeitabständen, um Änderungen des Lüftspiels aufgrund von Verschleiß der Reibflächen der Bremse auszugleichen.

Eine solche feste Einstellung des Lüftspiels ist jedoch nicht in allen Situationen optimal. Je nach den Umgebungsbedingungen kann eine ungeeignete Einstellung des Lüftspiels sogar zu einer Verschlechterung der Bremsleistung des Kraftwagens führen.

Die DE 10 2009 023 782 A1 beschreibt ein Verfahren, bei dem das Lüftspiel in Abhängigkeit von der Geschwindigkeit geregelt wird. Beim Überschreiten eines geschwindigkeitsabhängigen Beschleunigungsschwellenwertes wird dabei das Lüftspiel der Bremse erhöht.

Aus der DE 10 2004 030 464 A1 ist es bekannt, das Lüftspiel bei ruckartigem Lösen des Gaspedals zu reduzieren, um eine folgende Vollbremsung schneller durchführen zu können.

Die JP 2001 343 036 A offenbart ein Verfahren, bei dem ungleichmäßiger Verschleiß der Bremsscheibe detektiert und als Reaktion darauf das Lüftspiel erhöht wird.

Aus der DE 101 07 844 A1 ist es bekannt, beim Anfahren des Kraftwagens das Lüftspiel zu reduzieren, so dass Verschmutzungen auf der Bremse abgetragen werden.

Der vorliegenden Erfindung liegt die Aufgabe zugrunde, ein Verfahren der eingangs genannten Art bereitzustellen, welches eine verbesserte Bremsleistung eines Kraftwagens gewährleistet.

Diese Aufgabe wird durch ein Verfahren mit den Merkmalen des Patentanspruchs 1 gelöst.

Bei einem erfindungsgemäßen Verfahren zum Betreiben eines Kraftwagens mit wenigstens einer Bremse ist vorgesehen, ein Lüftspiel der Bremse in Abhängigkeit von einem Betriebszustand des Kraftwagens einzustellen. Damit kann gewährleistet werden, dass in allen Betriebszuständen des Kraftwagens eine besonders gute Bremsleistung erbracht werden kann.

Erfindungsgemäß wird das Lüftspiel bei abgestelltem Motor auf Null reduziert. Mit anderen Worten liegen im abgestellten Kraftwagen die Bremsbeläge kraftfrei an den Reibflächen der Bremsscheiben an. Hierdurch wird das Eindringen von Schmutzpartikeln und Wasser zwischen Bremsbeläge und Bremsscheibe verhindert. Dies reduziert den Verschleiß der Bremsen und erhöht ihre Lebensdauer.

Erfindungsgemäß wird ferner das Lüftspiel bei Unterschreiten einer vorgegebenen Umgebungstemperatur für eine vorgegebene Fahrstrecke nach Start des Kraftwagens auf Null reduziert. Hat sich aufgrund niedriger Umgebungstemperaturen Eis auf den Bremsscheiben gebildet, kann dieses nach dem Start des Kraftwagens durch die anliegenden Bremsbeläge von den Bremsscheiben abgetragen werden. Eine Verschlechterung der Bremsleistung durch Eisbildung wird so vermieden.

Bei einer bevorzugten Ausführungsform der Erfindung wird das Lüftspiel bei Auswahl eines Geländebetriebsmodus durch einen Fahrer des Kraftwagens auf den kleinsten möglichen Wert reduziert, bei welchem die Bremsbeläge gerade nicht an der Bremsscheibe anliegen. Hierdurch wird das Eindringen von Schmutzpartikeln, die gerade bei der Fahrt im Gelände im verstärkten Maß aufgewirbelt werden, zwischen Bremsbeläge und Bremsscheibe vermieden. Auch hierdurch kann der Verschleiß der Bremsen reduziert werden.

Bei einer weiteren bevorzugten Ausführungsform der Erfindung wird bei Auswahl eines Sportbetriebsmodus durch den Fahrer das Lüftspiel auf einen kleineren Wert eingestellt, als bei Auswahl eines Normal- oder Komfortbetriebsmodus. Durch das verkleinerte Lüftspiel wird im Sportbetriebsmodus des Kraftwagens ein schnelleres Ansprechverhalten der Bremse als im Normal- oder Komfortbetriebsmodus ermöglicht.

Vorzugsweise wird bei Überschreiten einer vorgegebenen Temperatur der Bremse das Lüftspiel auf den größtmöglichen Wert eingestellt. Durch den großen Abstand zwischen Bremsbelägen und Bremsscheibe können die Komponenten der Bremse bei einem derart eingestellten Lüftspiel besonders gut Bremsmomente abbauen, so dass sich die Bremse wieder abkühlen kann. Hierdurch wird das Abkühlverhalten der Bremse optimiert und somit die Betriebstemperaturen reduziert. Dadurch werden mögliche Verformungen von Komponenten der Bremse aufgrund von Überhitzung reduziert und somit die Lebensdauer der Bremsbeläge/-scheibe erhöht.

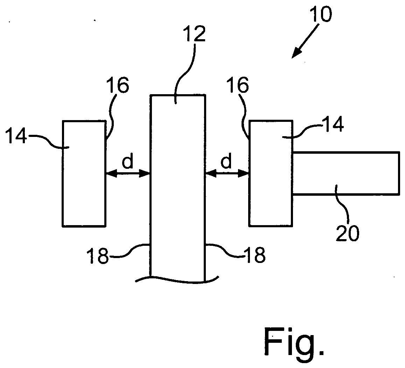

Im Folgenden wird die Erfindung und ihre Ausführungsformen anhand der Zeichnung näher erläutert. Die einzige Figur zeigt hierbei eine schematische Darstellung einer im Rahmen eines Ausführungsbeispiels eines erfindungsgemäßen Verfahrens verwendbaren Bremse.

Eine im Ganzen mit 10 bezeichnete Bremse umfasst eine Bremsscheibe 12 sowie zwei 14. Im gezeigten Ruhezustand der Bremse sind die Reibflächen 16 der Bremsbeläge 14 um einen Abstand d, der als Lüftspiel bezeichnet wird, von den Reibflächen 18 der Bremsscheibe 12 beabstandet. Bei einem Bremsvorgang werden die Bremsbeläge 14 mittels eines elektromechanischen Aktuators 20 mit einer vorgegebenen Kraft an die Bremsscheibe 12 angepresst, so dass durch die Reibung zwischen Bremsscheibe 12 und Bremsbelägen 14 kinetische Energie des Kraftwagens durch Reibung in Wärme umgewandelt wird.

Mittels des Aktuators 20 kann ferner das Lüftspiel d im Ruhezustand der Bremse 10 auf beliebige vorgegebene Werte eingestellt werden. Hierdurch ist es möglich, das Ansprechverhalten der Bremse 10 zu variieren. Je geringer das Lüftspiel d ist, desto schneller werden die Bremsbeläge 14 bei einem Bremsvorgang an die Bremsscheibe 12 angepresst. Dies kann beispielsweise genutzt werden, um bei Wahl eines sportlichen Fahrmodus durch einen Fahrer ein schnelleres, sportlicheres Ansprechverhalten der Bremse 10 einzustellen, als in einem normalen oder komfortablen Fahrmodus. Im sportlichen Modus wird hierzu ein geringeres Lüftspiel d eingestellt als im normalen oder komfortablen Modus.

Die Einstellung des Lüftspiels d kann ferner dazu Anwendung finden, Verschmutzung und damit einhergehenden Verschleiß der Bremse 10 zu reduzieren. Hierzu wird beim Abstellen des Kraftwagens das Lüftspiel d auf Null reduziert. Die Bremsbeläge 14 liegen dann kraftfrei an der Bremsscheibe 12 an, so dass kein Schmutz und keine Feuchtigkeit in den Raum zwischen Bremsscheibe 12 und Bremsbelägen 14 eindringen kann.

Bei tiefen Außentemperaturen wird das Lüftspiel d auch für eine kurze Fahrstrecke nach dem Start des Kraftwagens bei Null zu belassen. Durch das kraftfreie Anliegen der Bremsbeläge 14 an der Bremsscheibe 12 wird keine nennenswerte Bremswirkung erzielt, an der Bremsscheibe 12 abgelagertes Eis wird jedoch durch die Bremsbeläge 14 abgetragen, so dass während der restlichen Fahrt die Bremsleistung verbessert wird.

Auch die Temperatur der Bremse 10 bzw. der Bremsscheibe 12 kann bei der Einstellung des Lüftspiels d einfließen. Überschreitet diese Temperatur einen vorgegebenen Wert, so kann das Lüftspiel d auf den größten konstruktiv möglichen Wert eingestellt werden. Durch den weiten Zwischenraum zwischen Bremsscheibe 12 und Bremsbelägen 14 kann dann besonders das Bremsmoment schneller und restfreier abgebaut werden, so dass sich die Bremse 10 besonders schnell abkühlen kann.

Bei geländegängigen Fahrzeugen kann die Einstellung des Lüftspiels d schließlich Anwendung zum Schutz der Bremse 10 vor Verschmutzung durch während der Geländefahrt aufgewirbelte Schmutzpartikel finden. Hierzu wird bei Auswahl eines Geländebetriebsmodus durch den Fahrer oder bei sonstiger Erkennung einer Geländefahrt das Lüftspiel d soweit reduziert, dass die Bremsbeläge 14 gerade noch nicht an der Bremsscheibe 12 anliegen. In den kleinen verbleibenden Spalt zwischen Bremsscheibe 12 und Bremsbelägen 14 kann dann kaum Schmutz eindringen, wodurch die Bremse 10 vor Verschleiß geschützt wird, negative Einflüsse auf die Bremsregelung reduziert werden und das Ansprechverhalten verbessert wird.

Auch die Fahrzeuggeschwindigkeit kann bei der Einstellung des Lüftspiels d einfließen. Generell reduziert ein geringeres Lüftspiel d den Verfahrweg des Bremskolbens beim Aufbau des Bremsmoments. Bei niedrigen Fahrzeuggeschwindigkeiten und speziell im stillstandsnahen Bereich verbessert dies das Ansprechverhalten der Bremse und reduziert mögliche Geräusche, die beim Verfahren des Bremskolbens entstehen. Bei höheren Geschwindigkeiten ist ein großes Lüftspiel d zum möglichst effektiven Abbau der Bremsmomente sinnvoll. Dies trägt zu reduziertem Bremsbelagverschleiss, erhöhter Leistungsfähigkeit der Bremse und minimalem Kraftstoffverbrauch des Fahrzeugs bei.

## Patentansprüche

1. Verfahren zum Betreiben eines Kraftwagens mit wenigstens einer Bremse (10), bei welchem ein Lüftspiel (d) der Bremse (10) in Abhängigkeit von einer Geschwindigkeit des Kraftwagens eingestellt wird, wobei das Lüftspiel (d) der Bremse (10) mit steigender Geschwindigkeit des Kraftwagens erhöht wird,
**dadurch gekennzeichnet, dass**
das Lüftspiel (d) bei abgestelltem Motor auf Null reduziert wird und auf diesem Wert bei Unterschreiten einer vorgegebenen Umgebungstemperatur für eine vorgegebene Fahrstrecke nach Start des Kraftwagens belassen wird.

2. Verfahren nach Anspruch 1,
**dadurch gekennzeichnet, dass**
das Lüftspiel (d) bei Auswahl eines Geländebetriebsmodus durch einen Fahrer des Kraftwagens auf den kleinstmöglichen Wert eingestellt wird, bei welchem gerade noch kein Kontakt zwischen Bremsbelägen (14) und Bremsscheibe (12) der Bremse (10) besteht.

3. Verfahren nach einem der Ansprüche 1 bis 2,
**dadurch gekennzeichnet, dass**
das Lüftspiel (d) bei Auswahl eines Sportbetriebsmodus durch den Fahrer des Kraftwagens auf einen kleineren Wert eingestellt wird als bei Auswahl eines Normal- oder Komfortbetriebsmodus.

4. Verfahren nach einem der Ansprüche 1 bis 3,
**dadurch gekennzeichnet, dass**
das Lüftspiel (d) bei Überschreiten eines vorgegebenen Wertes für eine Temperatur der Bremse (10) auf den größtmöglichen Wert eingestellt wird.

## Claims

1. Method of operating a motor vehicle comprising at least one brake (10), in which a play (d) of the brake (10) is adjusted as a function of a speed of the motor vehicle, wherein the play (d) of the brake (10) is increased as the speed of the motor vehicle increases,
**characterised in that**
when the engine is switched off, the play (d) is reduced to zero and is left at this value if a prespecified ambient temperature is fallen below for a predefined route after starting the motor vehicle.

2. Method according to claim 1,
**characterised in that**
when the driver of the motor vehicle selects an off-road operating mode the play (d) is adjusted to the minimum value, at which there is still no contact between the brake pads (14) and brake disc (12) of the brake (10).

3. Method according to any claims 1 to 2,
**characterised in that**
when the driver of the motor vehicle selects a sports operating mode the play (d) is adjusted to a smaller value than when the normal or comfort operating mode is selected.

4. Method according to any of claims 1 to 3,
**characterised in that**
if a prespecified value for a temperature of the brake (10) is exceeded the play (d) is adjusted to the maximum value.

## Revendications

1. Procédé pour le fonctionnement d'un véhicule automobile avec au moins un frein (10), où un jeu de purge (d) du frein (10) est réglé en fonction d'une vitesse du véhicule automobile, dans lequel le jeu de purge (d) du frein (10) est augmenté à vitesse croissante du véhicule automobile,
**caractérisé en ce que**
le jeu de purge (d) est réduit à zéro en cas de moteur arrêté et est laissé à cette valeur en cas de non atteinte d'une température ambiante prédéfinie pour un trajet prédéfini après le démarrage du véhicule automobile.

2. Procédé selon la revendication 1,
**caractérisé en ce que**
le jeu de purge (d) est réglé, lors de la sélection d'un mode de fonctionnement terrain par un conducteur du véhicule automobile, à la valeur la plus petite possible, où il n'existe justement pas encore de contact entre les garnitures de frein (14) et le disque de frein (12) du frein (10).

3. Procédé selon l'une quelconque des revendications 1 à 2,
**caractérisé en ce que**
le jeu de purge (d) est réglé, lors de la sélection d'un mode de fonctionnement sport par le conducteur du véhicule automobile, à une plus petite valeur que lors de la sélection d'un mode de fonctionnement normal ou confort.

4. Procédé selon l'une quelconque des revendications 1 à 3,
**caractérisé en ce que**
le jeu de purge (d) est réglé, en cas de dépassement d'une valeur prédéfinie pour une température du frein (10), à la valeur la plus grande possible.
